# EUROPÄISCHE PATENTANMELDUNG

(11) **EP 4 782 578 A1**
(43) Veröffentlichungstag der Anmeldung: **29.07.2026**
(21) Anmeldenummer: 25153472.3
(22) Anmeldetag: 23.01.2025
(51) Int. Cl.: C25B 9/77, C25B 13/02, C25B 9/23, C25B 1/04

(54) **VERFAHREN ZUR HERSTELLUNG EINER MEMBRAN-DICHTUNGSANORDNUNG FÜR EINE ELEKTROCHEMISCHE ZELLE, ENTSPRECHENDES ZELLELEMENT UND ELEKTROLYSESYSTEM**

(71) Anmelder: Siemens Energy Global GmbH & Co. KG, 81739 München (DE)
(72) Erfinder: Suermann, Michel, 91054 Erlangen (DE); Göbel, Fabian, 12163 Berlin (DE); Kink, Julian, 91052 Erlangen (DE); Loudon, Kai Matthew, 10999 Berlin (DE); Merkel, Marcel, 95326 Kulmbach (DE); Peltier, Vincent, 42410 Chavanay (FR); Spies, Alexander, 95478 Kemnath (DE)

(57) **Zusammenfassung**

Verfahren zur Herstellung einer Membran-Dichtungsanordnung für eine elektrochemische Zelle, entsprechendes Zellelement und Elektrolysesystem

Es wird ein Verfahren zur Herstellung einer Membran-Dichtungsanordnung für eine elektrochemische Zelle, insbesondere eine Elektrolysezelle angegeben. Das Verfahren umfasst die Schritte S1, Bereitstellen einer Membran bzw. einer Membran-Elektrodeneinheit, umfassend auf die Membran aufgebrachte Elektrodenschichten, welche im Betrieb der Zelle als Anoden- bzw. Kathodenkatalysator dienen, S2, Bereitstellen einer Dichtung, wobei die Dichtung ausgelegt ist, im Betrieb der elektrochemischen Zelle einen Anodenraum bzw. einen Kathodenraum zu dichten, und S3, stoffschlüssiges Verbinden der Membran bzw. Membran-Elektrodeneinheit und der Dichtung zu einer vorgefertigten Baugruppe. Weiterhin werden eine entsprechende Membran-Dichtungsanordnung, eine diese aufweisende elektrochemische Zelle, ein Zellelement und ein entsprechendes Elektrolysesystem angegeben.

## Beschreibung

Die vorliegende Erfindung betrifft ein Verfahren zur Herstellung einer Membran-Dichtungsandrohung für eine elektrochemische Zelle, insbesondere eine Elektrolysezelle. Weiterhin werden ein Zellelement, eine entsprechend Membran-Dichtungsanordnung sowie ein Verfahren zum Herstellen eines Zellstapels sowie ein entsprechender Elektrolyseur angegeben.

Die Elektrolyse von Wasser betrifft ein vollständig klimafreundliches und nachhaltiges Verfahren zum Gewinnen von Wasserstoff (H₂) unter Nutzung von elektrischer erneuerbarer Energie. Wasserstoff kann bekanntlich als Energieträger, als Brennstoff oder Brennstoffzusatz genutzt werden und spielt daher eine wichtige Rolle in der künftigen Energietechnik. Durch das Potenzial, H₂ klimaneutral in großen Mengen herstellen zu können und/oder beispielsweise über Wasserstoffträger, wie Ammoniak, "kohlenstofffrei" zu speichern oder zu transportieren, werden auch dem Verkehrssektor, der Chemie- und beispielsweise der Stahlindustrie vielversprechende Lösungen für das Gelingen der Energiewende geboten.

Insbesondere die PEM-Wasserelektrolyse (PEM steht für "Polymer-Elektrolyt-Membran" oder "proton exchange membrane") gewinnt unter anderem aufgrund ihrer Teillastfähigkeit und niedriger Betriebskosten immer mehr Bedeutung in der industriellen Herstellung von grünem Wasserstoff aus regenerativer Energie.

Auch wenn der größte Teil des Wasserstoffs heutzutage noch konventionell, beispielsweise durch Dampfreformierung von Methan oder Kohlevergasung hergestellt wird, werden aggressive Investitionen und Fördermaßnahmen absehbar einen deutlichen Trend hin zur regenerativen Wasserstofferzeugung herbeiführen, sei es über Wege der PEM-, alkalischen Elektrolyse oder der AEM-Elektrolysetechnologie ("Anion Exchange Membrane").

Unter anderem bei der PEM-Elektrolysezelle weist die Membran an voneinander abgewandten Oberflächen eine jeweilige Katalysatorschicht auf. An die Katalysatorschichten grenzen in der Regel die Gasdiffusionsschichten, die unter anderem der elektrischen Kontaktierung dienen. Vorzugsweise sind die Gasdiffusionsschichten bzw. Gasdiffusionslagen (GDL) zugleich so ausgebildet, dass sie den erforderlichen Stoff- oder Fluidtransport während des bestimmungsgemäßen Betriebs der Elektrolysezelle ermöglichen. Die Gasdiffusionsschicht stellt weiterhin die erforderliche "elektrische Leitfähigkeit" bereit, um die Kontaktplatten und die Katalysatorschichten elektrisch miteinander zu koppeln. Dadurch kann im Bereich der Katalysatorschichten die gewünschte elektrochemische Reaktion realisiert werden. Auf beiden Seiten der jeweiligen Elektrolysezelle (an beiden Halbzellen, d. h. Anode und Kathode) grenzen die Gasdiffusionslagen ihrerseits häufig an jeweilige elektrisch leitfähige Bipolar- oder Medienverteilplatten an.

In Zellstapeln, wie sie beispielsweise in Brennstoffzellen oder in Elektrolyseuren zu finden sind, werden zur Erhöhung einer nutzbaren Spannung oder zur Erhöhung eines Mediendurchsatzes Zellen übereinandergestapelt. Derartige Stapel ("stacks") bestehen also abwechselnd aus der aktiven Komponente, bei einem Elektrolysezellenstapel oft "MEA"-Membran-Elektrodenanordnung oder Membran-Elektrodeneinheit" genannt, und aus den Bipolarplatte.

Bei dem elektrochemisch zu verteilenden und zu prozessierenden Fluid kann es sich insbesondere um ein Gas und/oder um eine Flüssigkeit, einen Elektrolyten, einen Katalysten, einen Analysten oder ein Edukt für den Betrieb der betreffenden elektrochemischen Zelle, handeln.

Das Erzeugen von Wasserstoff erfolgt elektrolytisch aus Wasser als Edukt. Es handelt sich hierbei um einen elektrochemischen Vorgang, bei dem Wasser in seine chemischen Bestandteile, Sauerstoff (O₂) und Wasserstoff, getrennt wird. Die elektrochemischen Zellreaktionen können wie folgt beschrieben und unterschieden werden:

| | |
|---|---|
| Anodenelektrode | 2*H*₂0 → 4*H⁺* + 0₂ + 4*e*⁻ |
| Kathodenelektrode | 4*H⁺* + 4*e*⁻ → 2*H*₂ |

Durch eine für Ionen leitfähige Membran werden die beiden Teilreaktionen räumlich voneinander getrennt. Insbesondere über einen Fluss von Protonen (H⁺) durch die Membran fließt schließlich ein Ionenstrom von einer Halbzelle zur anderen, wobei an den jeweiligen Elektroden Wasserstoff beziehungsweise Sauerstoff erzeugt werden.

Beispielhaft für die PEM-Wasserelektrolyse beschrieben, werden fertigungstechnisch bereits verschiedene Subkomponenten in Zellen kombiniert und diese wiederkehrend zu einem Stapel ("Stack") zusammengebaut bzw. in Reihe verschaltet. Die Komponenten liegen zunächst einzeln bzw. lose vor und müssen verbunden, gegenseitig angeordnet, fixiert und/oder gefügt werden, was insbesondere die im Folgenden beschriebenen technische Probleme mit sich bringt.

Hinsichtlich des Zelldesigns ergibt sich grundsätzlich bei einer Vielzahl von verschiedenen und zunächst einzeln vorliegenden Elementen oder Subkomponenten eine Limitierung bei der Auswahl der Komponenten, aufgrund von deren individuellen (Material-)Eigenschaften und Montagefähigkeit.

Zudem wird die Montage der Komponenten mit zunehmender Anzahl von Einzelteilen durch das Risiko des Verrutschens einzelner Komponenten beim Einlegen in einen Aufbau oder in einen Zellrahmen erschwert. Weiterhin steigt die Anfälligkeit der Komponenten für Beschädigung von, wenn diese fehlerhaft oder sogar gerade noch innerhalb gewisser Toleranzen verbaut, aber dennoch mechanisch nicht hinreichend abgestützt oder übergebührend beansprucht werden. Alle diese technischen Schwierigkeiten laufen insbesondere der fertigungstechnischen Maßgabe zuwider, die Integrationsdichte der Zellen (kleinerer "footprint") zu erhöhen.

Der Aufbau bzw. die Bestückung einzelner Zellen zu einem Zellstapel erfordert daher bislang weitgehend eine manuelle Montage, insbesondere bezüglich der Membranen und Dichtungen. Der manuelle Aufbau verursacht hingegen hohe Kosten, ist aufwendig, langsam und inkompatibel mit angestrebten digitalen und automatisierten Montage- Test- und Qualitätssicherungskonzepten.

Beispielsweise ist bei der konventionell bestehenden Montage und Stapelung von elektrochemischen Zellen eine fluidtechnische Dichtheitsprüfung nachteilhaft erst nach vollständiger Montage des Stapels möglich. Gleiches gilt für eine elektrische Kurzschlussprüfung und die generelle Funktionsprüfung des Stapels, welche aufgrund der dargelegten technischen Schwierigkeiten eine vollständige Montage impliziert.

Bisher wurde diese Probleme nur ansatzweise gelöst bzw. damit umgangen, dass beispielsweise eine aufwendige Auswahl eines Zelldesigns sowie geeigneter Materialien und Komponenten an jeweilige Randbedingungen vorgenommen wurde.

Wie bereits erwähnt liegen folgende Zellkomponenten inhärent aufgrund mangelnder Integration und Automatisierungskonzepte einzeln vor. Dies betrifft insbesondere eine Membran der entsprechenden elektrochemischen Zelle bzw. Membranelektrodeneinheit sowie die darauf anzuordnenden Katalysatorschichten ("catalyst layer"), poröse Transportschichten ("porous transport layer" (PTL)) bzw. Gasdiffusionsschichten ("gas diffusion layers" (GDL)).

Auch andere notwendige Funktionen bzw. Komponenten der Zelle sind betroffen, nämlich Dichtungen ("gaskets"), etwaige Ersatzdichtungen ("subgaskets") und der Zellrahmen oder Träger. Die genannte Ersatzdichtung kann neben einer dichtenden Funktion weiterhin eine elektrisch isolierende Funktion im Zellverbund haben und wird daher häufig auch als sogenannte isolierende Zwischenlage bezeichnet.

Konkret existieren im Stand der Technik bzw. in bekannten Ansätzen bereits einige Möglichkeiten, einzelne Komponenten vor der eigentlichen Stack-Montage miteinander zu verbinden, und dann als Mehrkomponenten-Lösung zu verbauen.

So kann die Membran mit den Katalysatorschichten zu einer katalysatorbeschichten Membran ("catalyst-coated membrane", CCM) verbunden werden.

Weiterhin ist eine Verbindung der oder einer Katalysatorschicht mit den porösen Transportschichten bzw. Gasdiffusionsfunktionen zu porösen Transportschicht-Elektroden ("porous transport electrode", PTE) bzw. Gasdiffusions-Elektroden ("gas diffusion electrode", GDE) möglich.

Als Alternative dazu würde sich unter Umständen auch eine einseitig mit einem Katalysator beschichtete Membran mit der Kombination einer porösen Transportschicht bzw. Gasdiffusionslage auf nur eine Seite der Zelle (Halbzelle) anbieten.

Es ist daher eine Aufgabe der vorliegenden Erfindung, Mittel anzugeben, mit denen die oben beschriebenen technischen Probleme angegangen und gelöst werden können. Insbesondere soll durch den Erfindungsgegenstand ein vorteilhafter Grad der Vorfertigung von elektrochemischen Zellkomponenten vorgestellt werden, welcher die Fertigung von entsprechenden Zellkomponenten deutlich verbessert und sogar weitgehend die Möglichkeit einer automatisierten Fertigung eröffnet.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zur Bereitstellung einer Membran-Dichtungsanordnung für eine elektrochemische Zelle. Synonym kann sich das Verfahren auch auf die die entsprechende Membran-Dichtungsanordnung aufweisende elektrochemischen Zelle selbst beziehen.

Bei der genannten elektrochemischen Zelle handelt es sich vorzugsweise um eine PEM-Elektrolysezelle; wenngleich sich die Vorzüge der Erfindung ohne Beschränkung der Allgemeinheit auch auf Brennstoffzellen, alkalische Elektrolysezellen, AEM-Technologie, oder sogar teilweise auf benachbarte Technologiegebiete wie Flüssigkeitsbatterien (Redox-Flow-Batterien) oder anderen Nasszellen erstrecken können.

Das Verfahren umfasst das Bereitstellen einer Membran bzw. einer Membran-Elektrodeneinheit (MEA) oder eines entsprechenden Diaphragmas, umfassend auf die Membran, die MEA oder das Diaphragma aufgebrachte Elektrodenschichten, welche im Betrieb der Zelle als Anoden- bzw. Kathodenkatalysator dienen.

Das Verfahren umfasst weiterhin das Bereitstellen einer Dichtung, wobei die Dichtung ausgelegt bzw. eingerichtet ist, im Betrieb der elektrochemischen Zelle einen Anodenraum bzw. einen Kathodenraum zu dichten. Mit dieser Dichtung kann zweckmäßigerweise ein Fluidkanal zwischen der Membran und beispielsweise einer benachbarten Bipolarplatte oder einer Stromverteilerplatte abgedichtet werden. Zudem kann durch die Dichtung ebenfalls zuverlässig ein elektrischer Kurzschluss zwischen einzelnen Zellkomponenten verhindert werden.

Das Verfahren umfasst zudem das stoffschlüssige Verbinden oder Fügen der Membran bzw. Membranelektrodeneinheit und der Dichtung zu einer vorgefertigten Baugruppe. Speziell dieser Verbund aus Membran bzw. Membranelektrodeneinheit und der vorgestellten Dichtung bedeutet vorteilhafterweise eine fertigungstechnische Montageerleichterung, da ein bereits vorgefertigter Komponentenverbund deutlich einfacher positioniert und verarbeitet werden kann.

Es wird zudem ein erhöhter Automatisierungsgrad der Montage erreicht, welche es mit Vorteil ermöglicht, dass einzelne Prozessschritte einfacher und/oder schneller durchgeführt werden können; der Komponentenverbund insbesondere mittels Roboter geführt und eingesetzt werden kann. Der Komponentenverbund ist zudem potenziell biegesteifer und kann damit einfacher von einem Roboter gehandhabt und verarbeitet werden.

Vorteile ergeben sich zudem hinsichtlich der Qualitätssicherung. Sowohl Dichtheits-, Kurzschluss-, und Funktionstest der Baugruppe können effizient bereits auf Komponentenebene erfolgen, womit sich ein erst an die Montage des gesamten Zellstapels anschließender Test erübrigt.

Dadurch kann Montageaufwand gespart werden, da Undichtigkeiten, Kurzschlüsse oder andere Funktionsbeeinträchtigungen bereits auf der Ebene der Zelle erkannt und pariert werden können; und zwar ohne, dass weitere Zellen bis dahin bereits zusammengesetzt worden sind.

Insgesamt wird also Ausschuss und Mehraufwand bei der Montage, bei den Funktionstests als auch bei der Qualitätssicherung minimiert und somit der Reparaturaufwand defekter Zellen, z.B. in einem bereits gefertigten Zellstapel oder Elektrolysesystem, vermieden.

Es ist auch evident, dass eine Positionierung einzelner Zellkomponenten, wie beispielsweise der Membran, der Zwischendichtung (subgasket) und der Hauptdichtung (gasket) vereinfacht und endgültig bei der Vormontage erfolgen kann. Dies wiederum verhindert das (spätere) Verrutschen während nachgelagerter Montageprozesse.

Gemäß einer vorteilhaften Ausgestaltung wird die Membran bzw. Membranelektrodeneinheit vor dem stoffschlüssigen Verbinden zunächst mit einer, vorzugsweise gleichartigen, Zusatzdichtung (subgasket), bzw. einer entsprechenden isolierenden oder dichtenden Zwischenlage ebenfalls stoffschlüssig verbunden. Dies ermöglicht es vorteilhafterweise, die Vorzüge der vorliegenden Erfindung auch hinsichtlich der Zusatzdichtung auszunutzen, und damit ein nachträgliches Verrutschen oder eine Beschädigung der filigranen Membran beispielsweise durch eine mangelnde mechanische Abstützung an kritischen Punkten zu verhindern.

Ein "Stoffschluss" soll vorliegend insbesondere bedeuten, die zu verbindenden Komponenten auf atomarer oder molekularer Ebene derart miteinander zu verbinden, dass ein Lösen allenfalls durch Zerstörung der Komponenten oder eines Verbindungsmittels möglich ist. Bei der Verbindung können vorliegend sowohl arteigene als auch artfremde Zusatzwerkstoffe oder Verbindungsmittel herangezogen werden. Die erfindungsgemäß gewählte Verbindungsart des Stoffschlusses ermöglicht vorteilhafterweise die verlässliche gegenseitige Fixierung der zu fügenden oder zu verbindenden Komponenten im weiteren Montageprozess.

Die Membran bzw. Membran-Elektrodeneinheit kann in vorteilhafter Weise an deren beiden Seiten, d.h. einer anodischen und einer kathodischen Halbzelle zugewandt, stoffschlüssig mit der beschriebenen Dichtung verbunden werden. Somit kann die erfindungsgemäße so vorgefertigte Baugruppe vorteilhaft mit einer Dichtfunktion sowohl des Anodenraums als auch des Kathodenraums der Membran versehen werden.

Der erfindungsgemäße stoffschlüssige Verbund kann insbesondere über Kleben, Laminieren, Heißpressen, eine Wärmebehandlung und/oder beispielsweise über Ultraschallfügung oder Ultraschallschweißen hergestellt oder gefügt werden.

Überhaupt kann der Verbindungsprozess im Wege eines sogenannten Chargenprozesses (vgl. auch "batch process") oder Satzbetrieb, also diskontinuierlich erfolgen. Alternativ ist eine Verbindung über das Rolle-zu-Rolle-Verfahren (kurz R2R-Verfahren, engl. "roll-to-roll") ebenso möglich und prädestiniert, insbesondere um die Fertigung kostengünstig und zeiteffizient durchzuführen.

In einer Ausgestaltung des Verfahrens weist die Dichtung bzw. die genannte Zusatzdichtung einen metallischen Grundkörper auf, welcher als mechanische Verstärkung der Dichtung fungieren kann. Weiterhin kann die Dichtung bzw. die Zusatzdichtung ein, insbesondere mit dem metallischen Grundkörper verbundenes, elastisches Dichtelement aufweisen, welches beispielsweise an den Rändern des metallischen Grundkörpers verklebt ist.

Gemäß einer Ausgestaltung kann das elastische Dichtelement also randseitig oder als randverklebte Dichtung auf dem metallischen Grundkörper bzw. Träger aufgebracht sein, wobei das elastische Dichtelement im Betrieb der Zelle vorzugsweise einen Fluidkanal bzw. eine Fluidein- bzw. austrittsöffnung definiert.

Das elastische Dichtelement der Dichtung bzw. der Zusatzdichtung kann polymere und/oder elastomere Materialien, insbesondere PEN, PPS, PTFE, PEEK, FKM, und/oder EPDM umfassen oder aus einer Werkstoffkombination dieser Stoffe bestehen. Die genannten Materialien haben sich insbesondere als beständig und funktional für in der Elektrolyse oder vergleichbaren Anwendungen zu führende Fluide herausgestellt. Zudem besteht Kompatibilität beispielsweise mit den gängigen Membranmaterialien für Brennstoffzellen oder Elektrolyseanwendungen, welche häufig PFSA- oder kohlenwasserstoffbasierte Polymere betreffen.

Über die dargestellten Möglichkeiten lässt sich vorteilhafterweise eine sogenannte Metall-Elastomer-Dichtung bereitstellen.

Ein weiterer Aspekt der vorliegenden Erfindung betrifft eine Membran-Dichtungsanordnung, insbesondere wie sie nach dem beschriebenen Verfahren herstellbar oder hergestellt ist.

Gemäß einer Ausgestaltung ist die Dichtung bzw. die Zusatzdichtung der beschriebenen Membrandichtungsanordnung, eine Ring- bzw. Flachdichtung.

Ein weiterer Aspekt der vorliegenden Erfindung betrifft ein Zellelement für eine elektrochemische Zelle, insbesondere eine Elektrolysezelle, wie eine PEM-Elektrolysezelle. Das Zellelement weist insbesondere die Membran-Dichtungsanordnung wie oben beschrieben auf, wobei das Zellelement vorzugsweise auf deren beiden Seiten der Membran mit der Dichtung bzw. einer gleichartigen Zusatzdichtung versehen ist. Dadurch lassen sich die oben genannten Vorteile realisieren.

Ein weiterer Aspekt der vorliegenden Erfindung betrifft einen Zellstapel mit einer Vielzahl solcher elektrochemischen Zellelemente. Zusätzlich zu den jeweiligen Membran-Dichtungsanordnungen (jeder Zelle) umfasst der Zellstapel zweckmäßigerweise entsprechende Stromverteiler und Gasdiffusionsschichten.

Ein weiterer Aspekt der vorliegenden Erfindung betrifft einen Elektrolyseur bzw. ein Elektrolysesystem, insbesondere ein PEM-Elektrolysesystem, umfassend eine Mehrzahl von solchen Zellstapeln, wobei jeder Zellstapel zweckmäßigerweise eine Vielzahl von elektrochemischen Zellelementen und gegebenenfalls weitere energietechnisch unterstützende Komponenten und Hilfssysteme ("Balance of Plant") umfasst.

Ein weiterer Aspekt der vorliegenden Erfindung betrifft ein Verfahren zum Herstellen eines Zellstapels ("stack") aus einer Vielzahl von Zellelementen für einen Elektrolyseur oder eine andere elektrochemische Anwendung. Das Verfahren umfasst die beschriebene Herstellung der Membran-Dichtungsanordnung, wobei die Membran bzw. Membran-Elektrodeneinheit jeder Zelle die Dichtung vorzugsweise auf beiden Membranseiten, d.h. einer anodischen und einer kathodischen Halbzelle zugewandt, umfasst. Das Verfahren umfasst zudem das wiederkehrende Aufeinanderstapeln der Vielzahl von Zellelementen zu dem Zellstapel.

Ausgestaltungen, Merkmale und/oder Vorteile, die sich vorliegend auf das Herstellungsverfahren bzw. die Membran-Dichtungsanordnung beziehen, betreffen genauso das gegenständliche Zelleelement, den Zellstapel oder den Elektrolyseur, und umgekehrt.

Der hier verwendete Ausdruck "und/oder" oder "bzw.", wenn er in einer Reihe von zwei oder mehreren Elementen benutzt wird, bedeutet, dass jedes der aufgeführten Elemente alleine verwendet werden kann; oder es kann jede Kombination von zwei oder mehr der aufgeführten Elemente verwendet werden.

Weitere Einzelheiten der Erfindung werden nachfolgend anhand der Figuren beschrieben. Hierin zeigen schematisch und stark vereinfacht
- Figur 1: eine schematische Ansicht von zu fügenden Einzelkomponenten für eine elektrochemische Zelle;
- Figur 2: ein schematisches Flussdiagramm andeutend erfindungsgemäße Verfahrensschritte;
- Figur 3: eine Elektrolysezelle mit einer Membran-Dichtungsanordnung in einer ersten Ausgestaltung;
- Figur 4: eine Elektrolysezelle mit einer Membran-Dichtungsanordnung in einer zweiten Ausgestaltung;
- Figur 5: eine Elektrolysezelle mit einer Membran-Dichtungsanordnung in einer weiteren Ausgestaltung;
- Figur 6: eine Elektrolysezelle mit einer Membran-Dichtungsanordnung, andeutend noch weitere Einzelheiten.

In den Ausführungsbeispielen und Figuren können gleiche oder gleichwirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

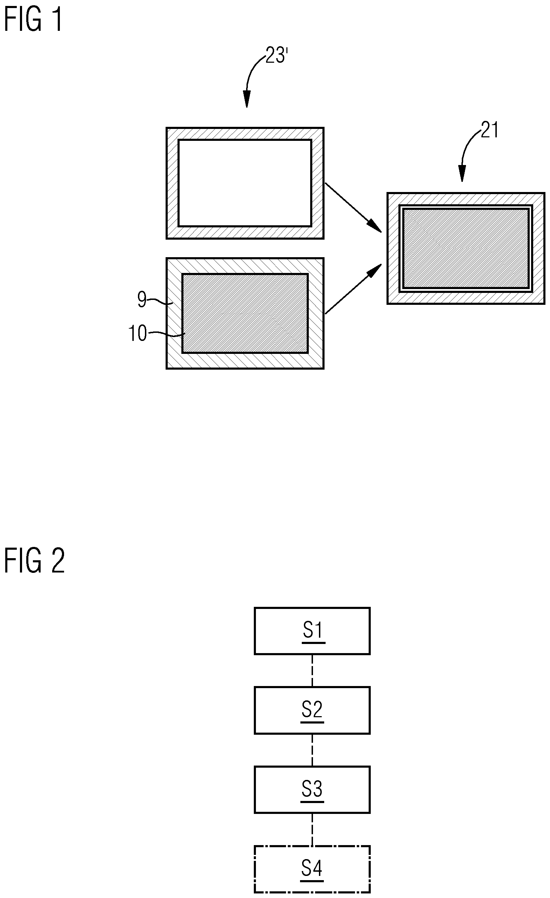

Figur 1 beschreibt anhand eines vereinfachten Schemas einzelne Komponenten einer elektrochemischen Zelle, stellt insbesondere eine Elektrolysezelle dar. Oben links ist eine Dichtung bzw. eine Zusatzdichtung 23' (englisch "subgasket") in Form eines einfachen Rahmens in einer Aufsicht dargestellt. Direkt darunter ist eine Membran 9 bzw. eine Membranelektrodeneinheit (MEA) gezeigt, welche die Membran 9 bereits mit aufgebrachten Elektrodenschichten versieht. Im Inneren der eckig dargestellten Membran 9 ist eine aktive Zellfläche 10 dunkel gekennzeichnet, welche insbesondere einen aufgetragenen Anoden- bzw. Kathodenkatalysator darstellen soll. In der Realität umfassen solche Edelmetallkatalysatoren häufig Iridium (Ir bzw. "Ir black" an der Anode), Ruthenium (Ru), Platin (Pt bzw. "Pt black") oder Platingruppenmetalle, welche in Form einer schwarzen Paste oder Pulverbeschichtung auf die Membran 9 aufgebracht werden.

Die Membran 9 besteht hingegen häufig aus einem PFSA- oder kohlenwasserstoffbasierten Polymer.

Die Membran und Membran-Elektrodeneinheit ist vorliegend synonym mit dem Bezugszeichen 9 bezeichnet. Ein weiterer Ausdruck für eine katalysatorbeschichtete Membran ist geläufig "CCM".

Die innere Ausnehmung, welche oben in dem Rahmen der Zwischendichtung 23' dargestellt ist, ist geringfügig größer als die aktive Zellfläche 10 der entsprechenden elektrochemischen Zelle, welche insbesondere eine PEM-Elektrolysezelle 1 sein soll.

Ein Verbund beider links in der Figur 1 dargestellten Komponenten ist rechts zusammen in einer Aufsicht dargestellt, wobei die Zwischendichtung 23' (mittig) auf bzw. unterhalb der Membran 9 eingezeichnet ist und demgemäß eine zumindest zum Teil vorgefertigte Komponente von Einzelteilen darstellt. Mit anderen Worten kann die Membran 9 (erfindungsgemäß) stoffschlüssig mit der Zwischendichtung 23' verbunden werden. Beispielhaft kann im äußeren Bereich der Aufsicht ein Teil der Membran 9 oder der CCM mit einem 'subgasket' 23' entweder auf einer oder auf beiden Seiten verbunden werden.

Diese (einzelnen) Komponenten können also zu einer Zelle oder einer entsprechend diese bildenden vorgefertigten Baugruppe kombiniert werden. Mehrere Zellen werden dann - wie im Weiteren noch näher ausgeführt wird - zweckmäßigerweise wiederkehrend aufeinander zu einem Stapel ("stack") gestapelt.

Figur 2 deutet anhand eines schematischen Flussdiagramms die erfindungsgemäßen Verfahrensschritte an. Das Verfahren ist ein Verfahren zur Herstellung einer Membran-Dichtungsanordnung für eine elektrochemische Zelle, insbesondere Elektrolysezelle, ähnlich zu der in Figur 1 dargestellten Situation.

Das Verfahren umfasst insbesondere die Schritte S1, Bereitstellen einer Membran 9 bzw. einer Membran-Elektrodeneinheit 21, umfassend auf die Membran 9 aufgebrachte Elektrodenschichten, welche im Betrieb der Zelle 1 als Anoden- bzw. Kathodenkatalysator dienen, und S2, Bereitstellen einer Dichtung, wobei die Dichtung ausgelegt ist, im Betrieb der elektrochemischen Zelle einen Anodenraum bzw. einen Kathodenraum zu dichten.

Weiterhin umfasst das Verfahren in Schritt S3 das stoffschlüssige Verbinden bzw. Fügen der Membran 9 bzw. Membran-Elektrodeneinheit und der Dichtung zu einer vorgefertigten Baugruppe (im Folgenden ebenfalls mit dem Bezugszeichen 1 gekennzeichnet).

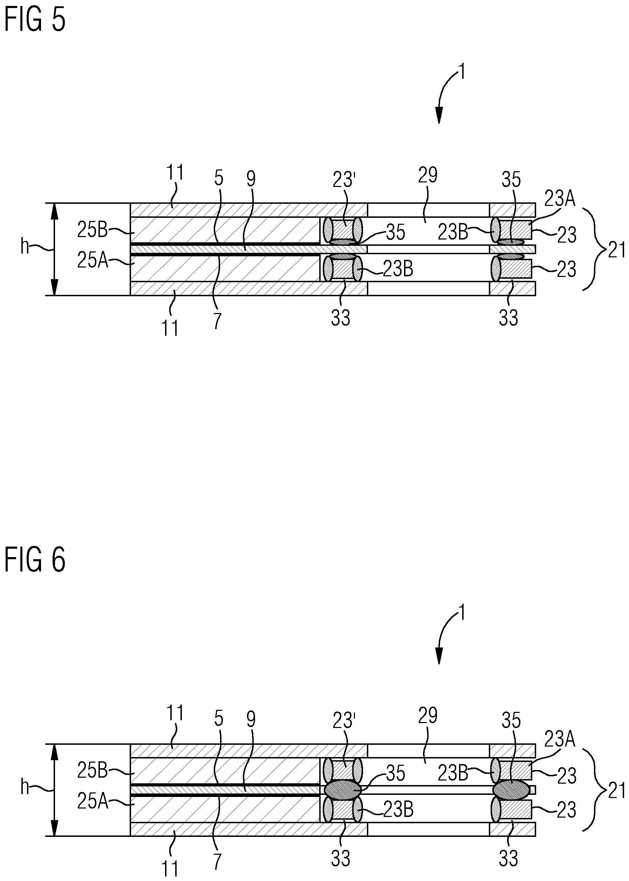

Teil der vorgestellten Erfindung ist ebenfalls ein Verfahren zum Herstellen eines Zellstapels 40 aus einer Vielzahl von Zellelementen 1 für einen Elektrolyseur 50 (vgl. schematische Darstellung der Figur 6 weiter unten). Das Herstellungsverfahren für den Zellstapel 40 umfasst die beschriebene Herstellung der Membran-Dichtungsanordnung 21, wobei die Membran bzw. Membran-Elektrodeneinheit jedes Zellelements die Dichtung 23 auf beiden Seiten der Membran 9 umfasst. Weiterhin umfasst das Verfahren in Schritt S4 das wiederkehrende Aufeinanderstapeln der Vielzahl von Zellelementen zu dem Zellstapel 40.

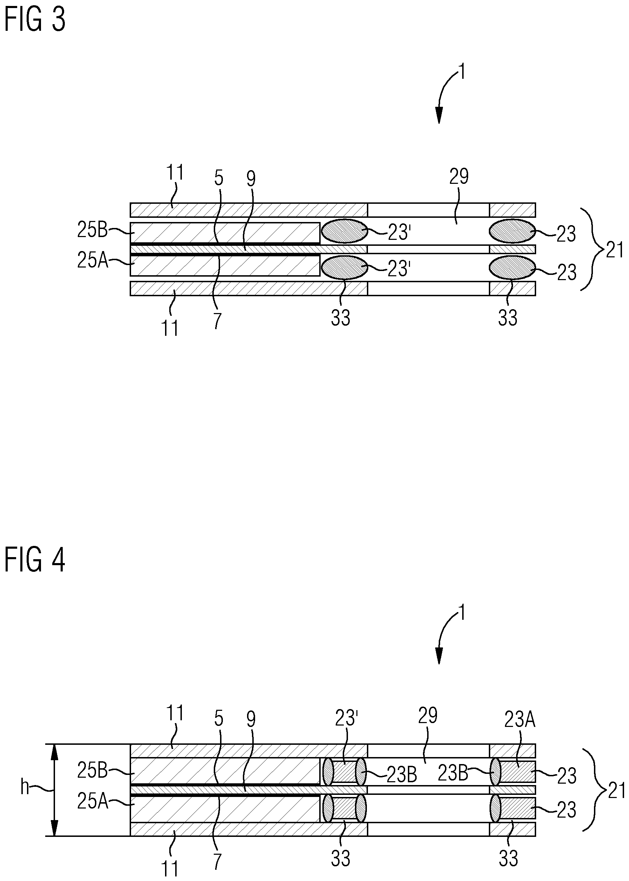

In Figur 3 und den folgenden Figuren werden erfindungsgemäße Aspekte der vorliegenden Erfindung, insbesondere hinsichtlich der Herstellung der Membrandichtungsanordnung 21 bzw. einer entsprechenden Elektrolysezelle anhand einer Schnittdarstellung näher beschrieben.

Typischerweise gleicht der gezeigte Aufbau etwa einer PEM-Elektrolysezelle, kann aber ohne Beschränkung der Allgemeinheit des Konzepts ebenfalls für eine Brennstoffzelle oder sonstige elektrochemische Anwendungen bedeutsam und anwendbar sein.

Ein Anodenraum mit einer Anode 5 und ein Kathodenraum mit einer Kathode 7 sind durch eine Membran 9, beispielsweise eine protonenleitende Polymermembran, getrennt, so dass eine kathodische Halbzelle 25A und eine anodische Halbzelle 25B gebildet sind. Die kathodische Halbzelle 25A und die anodische Halbzelle 25B sind jeweils durch einen Stromverteiler 11 begrenzt und elektrisch kontaktiert. Der Stromverteiler 11 wird auch als Bipolarplatte bezeichnet und kann an eine Gasdiffusionslage, poröse Transportschicht angrenzen (nicht explizit gekennzeichnet).

Es ist in Figur 3 insbesondere ein randnaher, Ausschnitt einer entsprechenden Elektrolysezelle 1 mit einer Membran-Dichtungsanordnung 21 in dekomprimiertem Zustand gezeigt, d.h. insbesondere vor einer Endmontage.

Die Elektrolysezelle 1 weist übereinander gestapelte und erfindungsgemäß hergestellte Dichtungen auf, die eine protonenleitende Membran 9 einschließen. Somit wird durch die Anordnung der Dichtungen ebenfalls die Funktion eines Umfassungsrahmens, Klemm- oder Zellrahmens für die Membran 9 übernommen oder bereitgestellt.

Gemäß dem Zellkonzept der Erfindung kann die Membran-Dichtungsanordnungen 21 mehrere Dichtungen 23 aufweisen. Gemäß der Ausgestaltung der Figur 3 sind vier Dichtungen 23 bzw. 23' als Teil einer Membran-Dichtungsanordnung 21 (Membrandichtungsverbund) gezeigt. Die äußeren Hauptdichtungen 23, von denen eine anodenseitig auf der Membran 9 und eine kathodenseitig unterhalb der Membran 9 angeordnet ist, wurden erfindungsgemäß stoffschlüssig mit der Membran 9 verbunden. Gleiches gilt analog für die weiter innen liegenden Ersatz- oder Zusatzdichtungen 23'.

Gemäß einer Ausgestaltung der Erfindung kann jedoch vor dem stoffflüssigen Verbinden der Membran 9 mit der Dichtung 23, diese Membran 9 zunächst mit einer Zusatzdichtung 23', stoffschlüssig, verbunden werden, wobei erst anschließend die Hauptdichtung 23 gefügt wird. Alternativ kann der stoffflüssige Verbund (vgl. insbesondere weiterhin Figuren 5 und 6 weiter unten) der stoffschlüssige Verbund gleichzeitig erfolgen.

Zur stoffschlüssigen Verbindung können die einzelnen Komponenten entsprechend in einem Fügeprozess miteinander verbunden werden, z.B. über Kleben, Laminieren, (Heiß-)Pressen, eine Wärmebehandlung oder Ultraschall-Schweißen.

Die Dichtungen 23 und/oder die Zusatzdichtungen 23' können gemäß dieser Ausgestaltung insbesondere als Ringdichtung oder ringartige Dichtung bzw. als Flachdichtung oder O-Ring ausgebildet sein.

Der mit dem Bezugszeichen 29 angedeutete Zwischenraum soll einen Fluidkanal für ein durch die elektrochemische Zelle 1 zu leitendes oder zu führendes Fluid F andeuten, gegen welches die beschriebenen Dichtungen die Zelle (beide Halbzellen) zuverlässig abdichten.

Dabei kann fertigungstechnisch eine Öffnung in einen Metallträger, beispielsweise in das Metallblech einer Bipolarplatte, gestanzt oder als Bohrung oder Langloch realisiert sein. Durch einen jeweiligen metallischen flächig ausgeführten Stromverteiler 11, auch als Bipolarplatte bezeichnet - wird der Anodenraum und der Kathodenraum der Elektrolysezelle 1 jeweils begrenzt und eingehaust und zugleich eine elektrische Kontaktierung und Anschlussmöglichkeit auf beiden Seiten bereitgestellt.

Die wulstförmige bzw. erhabene Ausgestaltung der Dichtungen 23 und 23' ermöglicht vorteilhafterweise eine Montagetoleranz und einen selbsttätigen Ausgleich bzw. eine Ausrichtung der Komponenten beim Zusammenbau; und begünstigt so eine Automatisierung in der Fertigung.

Die Figur 4 zeigt eine Ausgestaltung der vorliegenden Erfindung mit einer Membran-Dichtungsanordnung 21, welche als eine Metall-Elastomer-Dichtung konzipiert ist. Diese Dichtung weist einen metallischen Träger oder Grundkörper 23A und ein elastisches Dichtelement 23B auf. Der metallische Träger 23A übernimmt zweckmäßigerweise vorteilhaft die Rolle einer mechanischen Verstärkung während des Betriebs der Zelle 1. Es ist weiterhin zu erkennen, dass das elastische Dichtelement 23B beidseitig auf dem metallischen Grundkörper 23A aufgebracht ist, und das elastische Dichtelement 23B im Betrieb der Zelle 1 den Fluidkanal 29 definiert und abdichtet.

Das elastische Dichtelement 23 ist vorzugsweise aus einem polymeren und/oder elastomeren Material z.B. aus PEN, PPS, PTFE, PEEK, FKM, EPDM oder aus einer solchen Werkstoffkombination. Als Elastomer kommt vorzugsweise eine Fluorkautschuk-Mischung (FKM) in Betracht. Darunter versteht man eine ganze Gruppe verschiedener synthetischer PolymerMischungen, deren gemeinsames Merkmal das Monomer VDF (Vinylidendifluorid) ist. Das Material gehört zur M-Gruppe der Kautschuke, die sich durch eine gesättigte Kohlenstoffhauptkette auszeichnen. Das Material ist von sehr hochwertiger Qualität und weist hervorragende Eigenschaften auf, sodass der Werkstoff als "Allround"-Elastomer gilt. Begründet liegt dies in der Kombination einer guten Wärme- und Ozonbeständigkeit mit einer Beständigkeit gegen eine Vielzahl an Chemikalien.

Dieser Membrandichtungsverbund 21 ist vorzugsweise (in der Ausführungsform der Figur 3 ebenfalls möglich) derart angeordnet, dass die Membran-Elektrodeneinheit 9 gegenüber der Bipolarplatte 11 durch das Dichtungselement 23B schwimmend oder gleitend abdichtet. Ein Spalt 33 wird hier durch die wulstige bzw. erhabene Form des Dichtungselements 23B bewirkt, so dass auch im montierten Zustand der Metallträger 23A von dem Stromverteiler 11 über den Spalt 33 beabstandet ist und allein über das Dichtungselement 23B gummielastisch gehalten und positioniert werden kann.

Gegenüber Figur 3 ist das erfindungsgemäße Konzept in Figur 4 ebenfalls als randnaher Ausschnitt einer entsprechenden Elektrolysezelle 1, hier jedoch im endmontierten Zustand, abgebildet.

Vermöge der erfindungsgemäßen Konzepte kann eine neuartige Zellenkonstruktion bereitgestellt werden, die die Teileanzahl einzelner und gegenseitig beweglicher Komponenten erheblich reduziert. Dadurch wird die gesamte Elektrolysezelle 1 samt der Membran 9 und die gesamte Membranelektrodeneinheit fixiert, ausgerichtet und zugleich geschützt. Das erfindungsgemäße Konzept ermöglicht vorteilhaft weiterhin die kompakte Ausführung mit einer reduzierten Zellhöhe h.

Die Figuren 5 und 6 beschreiben die vorliegende Erfindung weiterhin anhand von schematischen Schnittdarstellungen einer entsprechenden Elektrolysezelle 1 mit einem Metall-Elastomer-Dichtkonzept 21.

Figur 5 verdeutlicht im Unterschied zu den Darstellungen der Figuren 3 und 4 die stoffschlüssige Verbindung (vgl. Bezugszeichen 35) zwischen der Membran 9 und den Dichtungen 23 bzw. 23'. Figur 5 zeigt also eine schematische Darstellung der erfindungsgemäßen Zelle mit einem Stoffschluss zwischen Membran 9 und der Ersatzdichtung 23' und zwischen der Membran und der Hauptdichtung 23, wobei die stoffschlüssige Fügung separat bzw. sequenziell oder einzeln erfolgt ist. Dies wird durch die separaten Bereiche der stoffschlüssigen Verbindung 35 angedeutet.

Im Gegensatz dazu zeigt die Figur 6 an den Verbindungspunkten zwischen Membran 9 und den Dichtungen 23 bzw. 23' nur einen Bereich des Stoffschluss 35, was einen integrierten oder gleichzeitigen Verbund der entsprechenden Komponenten andeutet.

Durch den Verbund wird (im Wesentlichen) ein Zellelement 1 bzw. eine elektrochemische Zelle, insbesondere eine Elektrolysezelle 1, bereitgestellt, welches auf beiden Seiten der Membran bzw. Membran-Elektrodeneinheit 9, d.h. einer anodischen und einer kathodischen Halbzelle zugewandt, die Dichtung 23 und/oder eine (gleichartige) Zusatzdichtung 23' umfasst. Ein Zellenstapel 40 mit einer Vielzahl von elektrochemischen Zellelementen 1, insbesondere Elektrolysezellen, ist in Figur 6 mit dem Bezugszeichen 40 schematisch und vereinfacht gezeigt.

In Figur 6 ist weiterhin ein Elektrolyseur bzw. Elektrolysesystem 50, insbesondere PEM-Elektrolyseur, angedeutet, welcher eine Mehrzahl von Zellstapeln 40 umfassen soll, wobei jeder Zellstapel eine Vielzahl elektrochemischer Zellelemente umfassen soll. Der Einfachheit halber sind weitere energietechnisch unterstützende Komponenten oder Hilfssysteme des Elektrolysesystems 50 in der schematischen Ansicht der Figur 6 nicht weiter dargestellt.

Die Erfindung lässt sich mit anderen Worten folgendermaßen damit zusammenfassen, dass die Membran 9 stoffschlüssig ggf. zunächst mit dem Subgasket 23' und dann zudem mit der Dichtung 23 verbunden wird; und damit als Membran-Subgasket-Gasket-Komponente' (als vorgefertigte Baugruppe) bereitgestellt wird.

## Patentansprüche

1. Verfahren zur Herstellung einer Membran-Dichtungsanordnung (21) für eine elektrochemische Zelle (1), insbesondere Elektrolysezelle, umfassend die Schritte:
- (S1) Bereitstellen einer Membran bzw. einer Membran-Elektrodeneinheit (9), umfassend auf die Membran aufgebrachte Elektrodenschichten (5, 7), welche im Betrieb der Zelle (1) als Anoden- bzw. Kathodenkatalysator dienen,
- (S2) Bereitstellen einer Dichtung (23), wobei die Dichtung ausgelegt ist, im Betrieb der elektrochemischen Zelle (1) einen Anodenraum bzw. einen Kathodenraum (25A, 25B) zu dichten, und
- (S3) stoffschlüssiges Verbinden der Membran bzw. Membran-Elektrodeneinheit (9) und der Dichtung (23) zu einer vorgefertigten Baugruppe.

2. Verfahren gemäß Anspruch 1, wobei die Membran bzw. Membran-Elektrodeneinheit (9) vor dem stoffschlüssigen Verbinden (S3) zunächst mit einer Zusatzdichtung (23`), ebenfalls stoffschlüssig, verbunden wird.

3. Verfahren gemäß Anspruch 1 oder 2, wobei die Membran bzw. Membran-Elektrodeneinheit (9) an deren beiden Seiten, d.h. einer anodischen und einer kathodischen Halbzelle zugewandt, stoffschlüssig mit einer Dichtung (23, 23') verbunden wird.

4. Verfahren gemäß einem der vorhergehenden Ansprüche, wobei die Dichtung (23, 23') einen metallischen Grundkörper (23A) und ein elastisches Dichtelement (23B) aufweist.

5. Verfahren gemäß Anspruch 4, wobei das elastische Dichtelement (23B) randseitig auf dem metallischen Grundkörper (23A) aufgebracht ist, und wobei das elastische Dichtelement (23B) im Betrieb der Zelle (1) einen Fluidkanal (29) definiert.

6. Verfahren gemäß einem der vorherigen Ansprüche, wobei die Dichtung (23, 23') PEN, PPS, PTFE, PEEK, FKM, und/oder EPDM umfasst.

7. Verfahren gemäß einem der vorherigen Ansprüche, wobei das stoffschlüssige Verbinden, insbesondere über Kleben, Laminieren, (Heiß-)Pressen, eine Wärmebehandlung und/oder Ultraschall-Schweißen erfolgt.

8. Verfahren zum Herstellen eines Zellstapels aus einer Vielzahl von Zellelementen (1) für einen Elektrolyseur (50), umfassend:
- die Herstellung der Membran-Dichtungsanordnung (21) gemäß einem der vorhergehenden Ansprüche, wobei die Membran bzw. Membran-Elektrodeneinheit (9) jedes Zellelements (1) die Dichtung (23, 23') auf beiden Seiten umfasst, und
- (S4) wiederkehrendes Aufeinanderstapeln der Vielzahl von Zellelementen (1) zu dem Zellstapel (40).

9. Membran-Dichtungsanordnung (21), insbesondere hergestellt nach dem Verfahren gemäß einem der Ansprüche 1 bis 7.

10. Membran-Dichtungsanordnung (21) gemäß Anspruch 9, wobei die Dichtung eine Ring- bzw. Flachdichtung ist.

11. Zellelement für eine elektrochemischen Zelle (1), insbesondere eine Elektrolysezelle, mit einer Membran-Dichtungsanordnung (21) nach einem der Ansprüche 9 oder 10, wobei das Zellelement auf beiden Seiten der Membran bzw. Membran-Elektrodeneinheit (9), d.h. einer anodischen und einer kathodischen Halbzelle zugewandt, die Dichtung (23, 23') umfasst.

12. Zellenstapel (40) mit einer Vielzahl von elektrochemischen Zellelementen, insbesondere Elektrolysezellen (1), nach Anspruch 11.

13. Elektrolysesystem (50), insbesondere PEM-Elektrolyseur, umfassend eine Mehrzahl von Zellstapeln (40) gemäß Anspruch 12.
